# EUROPEAN PATENT SPECIFICATION

(11) **EP 4 261 487 B1**
(45) Date of publication and mention of the grant of the patent: **31.12.2025**
(21) Application number: 22168067.1
(22) Date of filing: 13.04.2022
(51) Int. Cl.: F28D 9/04, F28D 21/00, F28F 9/02, E03C 1/00

(54) **DISHWASHER WITH A HEAT EXCHANGER UNIT OR A HEAT EXCHANGER DEVICE**
GESCHIRRSPÜLMASCHINE MIT EINER WÄRMETAUSCHEREINHEIT ODER EINERWÄRMETAUSCHERVORRICHTUNG
LAVE-VAISSELLE, AVEC UNE UNITÉ D'ÉCHANGEUR DE CHALEUR OU UN DISPOSITIF ÉCHANGEUR DE CHALEUR,

(43) Date of publication of application: 18.10.2023
(73) Proprietor: HAIER Germany GmbH, 81829 München (DE)
(72) Inventor: Cervenka, Bystrik, 90419 Nürnberg (DE); Bächer, Peter, 91301 Forchheim (DE); Dominik, Wojciech, 90478 Nürnberg (DE); Petracek, Pavol, 90482 Nürnberg (DE); LI, Hongkun, 91056 Erlangen (DE); Lampe, Hansjörg, 90491 Nürnberg (DE); Yang, Lin, Qingdao 266000, Shandong Province (CN); PAN, Xianjie, Qingdao 266000, Shandong Province (CN)
(74) Representative: Rau, Schneck & Hübner Patentanwälte Rechtsanwälte PartGmbB

(56) References cited:
- EP-A2- 2 443 984
- BE-A- 800 401
- CN-A- 101 779 933
- CN-A- 106 949 761
- GB-A- 509 289
- KR-U- 20100 007 952
- US-A- 2 131 265

## Description

The invention relates to a dishwasher with the heat exchanger unit or the heat exchanger device.

The prior art document EP 2 614 764 A2 discloses a heat exchanger device for a dishwasher to recover thermal energy from drain water for heating fresh water for a subsequent washing phase. The heat exchanger device comprises several layers, wherein each layer covers a single duct for conducting one fluid. The ducts in adjacent layers are separated from each other by means of a partition wall, which is configured to transfer thermal energy between the fluids within those ducts. The partition walls adjoin side walls, which determine the height of each layer. Such heat exchanger devices are expensive to manufacture, subject to clogging and limited in their capability to recover thermal energy.

KR 20 2010 0007952 U discloses a waste heat recovery heat exchanger. CN 101 779 933 A1 discloses a shower with long-acting recovery of residual heat. BE 800 401 A discloses a heat exchanger. CN 106 949 761 A discloses a spiral board type heat exchanger and welding method thereof. US 2,131,265 A discloses a spiral heat interchanger and method of making same. GB 509 289 A discloses improvements in plate-stack heat exchangers. EP 2 443 984 A2 discloses a coaxial heat exchanger for a household appliance.

The object of the present invention is to enhance a dishwasher by increasing its manufacturability, its reliability in use and its capability to recover thermal energy.

This object is achieved in accordance with the invention by a dishwasher having the features set out in claim 1.

According to an aspect of the invention, the dishwasher comprises a buffer tank for storing water, particularly for storing water heated by means of the heat exchanger unit or the heat exchanger device, and/or a flowmeter for detecting a mass flow of water, particularly received from a fresh water port, and/or a water level sensor for detecting a water level and/or an air brake for avoiding backflow of fluid, particularly to the fresh water port and/or from a drain water port, and/or a detergent tank and/or a salt tank and/or at least one water pump for pumping water and/or a heating element to heat water, particularly an electric heating element. The buffer tank preferably comprises a buffer tank housing without openings to the environment to prevent water leakage in case the dishwasher is tilted with the buffer tank filled with water or with an air vent opening to ensure pressure equalization with the environment, which is preferably located at the top of the buffer tank housing. The dishwasher preferably comprises a tub in which the dishes or cloths can be arranged and a sump. At least one, preferably two, water pumps can be connected to the sump to pump water out of the sump. A first water pump can be connected to circulate the water over the sump, at least one liquid dispenser, particularly a washing arm, and the tub, particularly the dishes. The second water pump can be connected to drain used water to the drain water port, particularly via the heat exchanger unit or the heat exchanger device.

Preferably, the at least one first duct and/or the first combined duct of the heat exchanger device is connected to receive fresh water via the fresh water port. The at least one second duct and/or the second combined duct is preferably connected such that it receives hot water, particularly from the sump.

According to an aspect of the invention, the dishwasher comprises a control unit, particularly for controlling the at least one water pump and/or the at least one valve and/or the heating element. The control unit can be in signal connection with the flow meter and/or the water level sensor. The control unit preferably comprises at least one electronic controller, preferably a micro controller.

It was found according to the invention, that a heat exchanger unit comprising a first duct and an adjacent second duct for conducting fluid, which are arranged within a chamber having a first cover wall and a side wall, can be manufactured particularly economically, is reliable in use and offers improved capabilities for recovering thermal energy, when a partition wall, which separates a fluid within the first duct from a fluid within the second duct adjoins the first cover wall of the chamber. This arrangement increases the surface of the partition wall that is in contact with the fluids within the first and second ducts between which thermal energy is to be exchanged. The increased surface improves the capability of the heat exchanger unit to recover thermal energy. Particularly, thermal energy can be transferred from a hot fluid within the second duct to a cold fluid within the first duct to a particularly high degree. Furthermore, the heat exchanger unit can be designed in a particularly space saving manner. The connection of the partition wall with the first cover wall results in a particularly reliable and economically manufacturable design.

Due to the side wall and the partition wall adjoining the first cover wall, the heat exchanger can be configured to have a modular design. Particularly, multiple of the heat exchanger units can be configured to be interconnected, particularly by stacking them on top of each other, to further increase the capability to recover thermal energy. The heat exchanger unit can thus be used very flexible for a wide range of applications, particularly for the dishwasher.

Preferably, the first duct and/or the second duct each comprise at least two, preferably exactly two, unit fluid ports to connect the first duct and/or the second duct. The first unit fluid ports for connecting the first duct and/or the second unit fluid ports for connecting the second duct can be configured in the form of a through hole in a wall of the chamber, particularly in the first cover wall.

Preferably, the chamber extends between a first face and a second face. At the first face, the chamber can be delimited by the first cover wall. The chamber preferably comprises a further cover wall, particularly a second cover wall, particularly for delimiting the chamber at the second face. The side wall preferably extends between the first face and the second face, particularly between the first cover wall and the further cover wall.

Preferably, the partition wall is connected to the first cover wall and/or the side wall and/or the further cover wall. The partition wall preferably divides a space within the chamber into at least the first duct and the second duct. Preferably, the connection between the partition wall and the first cover wall is a positive connection, a force-locking connection and/or a material connection, particularly a bonded or a welded connection. The partition walls can be connected to the further cover wall, by at least one of the aforementioned connection types, particularly the same connection type. The connection between the partition wall and the cover wall, particularly the first cover wall and/or the further cover wall, is preferably watertight and/or gastight. Such connection is robust in use and economical to manufacture.

Preferably, the side wall is connected to the first cover wall and/or to the further cover wall in a watertight manner. The connection can be a force-locking connection, a positive connection and/or a material connection, preferably a bonded or a welded connection. According to a particularly preferred embodiment, the side wall and the first cover wall and/or the further cover wall are formed in one piece, for example in an injection molding process. Preferably, the chamber is completely fluid-tight, particularly watertight and/or gastight, except for the unit fluid ports.

Preferably, the first duct and/or the second duct extend between the first face, particularly the first cover wall, and the second face, particularly the further cover wall. Preferably, the first duct and/or the second duct are at least partially delimited by the first cover wall and/or the further cover wall. The first duct and the second duct can overlap each other, particularly interlock each other, particularly wrap around each other, in a direction parallel to the first face and/or the second face. Thereby, the surface over which the thermal energy is transferred, can be further increased, in particular with respect to installation space.

According to a further aspect of the invention, the heat exchanger comprises at least one, preferably at least two, more preferably at least three, further ducts for conducting fluid, which are separate from the first duct and the second duct. The heat exchanger unit can thus be used particularly flexible for various applications.

Preferably, the partition wall and/or the first duct and/or the second duct are shaped single curved or double curved. The partition wall and/or the first duct and/or the second duct can be shaped round, particularly elliptical, particularly circular, and/or polygonal, particularly rectangular, particularly square, at least in sections, preferably in a top view. The top view is preferably perpendicular to the first face, more particular to a main extension plane of the first cover wall. Preferably, the partition wall comprises undercuts, preferably in a direction parallel to the first face, particularly parallel to the main extension plane of the first cover plate.

A ratio between a height of the partition wall and a thickness of the partition wall is preferably in a range from 1:1 to 50:1, preferably from 2:1 to 25:1, preferably from 5:1 to 20:1, preferably from 10:1 to 15:1. Preferably, the partition wall extends essentially perpendicular to the first face, particularly perpendicular to the main extension plane of the first cover plate. In general, an orientation parallel and/or perpendicular to a wall or a plane can differ from such orientation by a maximum of 30°, preferably by a maximum of 10°, preferably by a maximum of 5°, preferably by a maximum of 1°. The height of the partition wall is preferably measured perpendicular to the first cover plate. The height of the partition wall can be in a range from 5 mm to 100 mm, preferably from 7 mm to 50 mm, preferably from 10 mm to 25 mm. The thickness of the partition wall can be in a range from 0,2 mm to 5 mm, particularly from 0,5 mm to 4 mm, particularly from 1 mm to 2 mm. The capability to recover thermal energy can thus be further increased.

According to a further aspect of the invention, the ratio between the length of the partition wall and its maximum extension, particularly along a straight line, is preferably at minimum 2:1, preferably at minimum 5:1, preferably at minimum 10:1, preferably at minimum 20:1, preferably at minimum 50:1, preferably at minimum 100: 1, and/or at maximum 200: 1, preferably at maximum 100: 1. The capability to recover thermal energy can thus be further increased.

The partition wall is preferably manufactured in one piece.

The thickness of the side wall and/or the first cover wall and/or the further cover wall, particularly the second cover wall, can be in the same range as the thickness of the partition wall. Preferably, a ratio between the thickness of the side wall and/or the first cover wall and/or the further cover wall, and the thickness of the partition wall is in the range from 1:1 to 10: 1, preferably from 2:1 to 8:1, preferably from 4:1 to 6:1.

According to a further aspect of the invention, the heat exchanger unit, particularly the chamber, more particularly the first cover wall and/or the side wall and/or the further cover wall and/or the partition wall, are at least partially made from plastic material, preferably thermoplastic material. Preferred plastic materials comprise polyamide, polyethylene, polyvinylchloride, polycarbonate. Such material preferably comprises a filler, preferably from a non-plastic material, particularly ceramic material and/or metal material. Such filler can be used to adjust, particularly to increase or to decrease, the mechanical strength and/or the thermal conductivity and/or the flow properties in the molten state, of the plastic material.

According to a further aspect of the invention, an aspect ratio of the chamber in a plane of its main extension is in a range from 1:1 to 10:1, preferably from 1:1 to 5:1, preferably from 1:1 to 2:1, preferably from 1:1 to 1.5:1.

Preferably, a ratio between a length of the first duct and/or the second duct and a main extension of the space within the chamber and/or the side wall and/or the partition wall and/or a height of the partition wall is in a range from 500:1 to 1:1, preferably from 200:1 to 2:1, preferably from 50:1 to 10:1.

According to a further aspect of the invention, the first cover wall and/or the further cover wall, preferably the second cover wall, comprise a groove and/or a web, particularly in the form of a tongue, for a positive connection, particularly a tongue and groove connection, with the partition wall and/or the side wall.

According to a further aspect of the invention, the first duct and the second duct, preferably further the partition wall and/or the side wall and/or the at least one further duct, are crossed by the same plane. Such plane is preferably parallel to the first face and/or the second face, particularly a main extension plane of the first cover wall and/or the further cover wall. Preferably, such plane does not intersect the first cover wall and/or the further cover wall.

The heat exchanger device preferably comprises at least one of the features described above with reference to the heat exchanger unit. Preferably, the side walls of the heat exchanger units are connected to each other in a fluid tight manner and/or made in one piece. Preferably, the partition wall of the first heat exchanger unit adjoins the first cover wall of the second heat exchanger unit. The heat exchanger device preferably comprises a modular design with at least the two modularly designed heat exchanger units. Preferably, the first heat exchanger unit and the second heat exchanger unit are stacked on top of each other, preferably in a stacking direction, which is perpendicular to the first face, preferably to the first cover wall of the first heat exchanger unit. Such heat exchanger device is particularly economical to manufacture and provides further enhanced capabilities to recover thermal energy. The heat exchanger device can thus be used very flexible for a wide range of applications, particularly for the dishwasher.

According to an aspect of the invention, the partition walls and/or the first ducts and/or the second ducts of the at least two heat exchanger units are shaped identically. The heat exchanger units can share the same height, preferably in a direction perpendicular to the first cover wall and/or the same width, preferably in a direction parallel to the first cover wall.

According to an aspect of the invention, the lengths of the first ducts and/or the second ducts is essentially identical for each of the heat exchanger units. The length of the first combined duct and the length of the second combined duct can thus be a multiple of the lengths of the first ducts and/or the second ducts. The capability to recover thermal energy is thus increased.

The heat exchanger unit of a dishwasher as claimed in claim 2 is particularly compact and insensitive to clogging due to its self-cleaning capability. The shape of the spiral can be round, particularly elliptical, particularly circular, and/or polygonal, particularly hexagonal and/or rectangular, preferably equilateral. The spiral preferably comprises at least one, preferably at least two, preferably at least five, preferably at least ten windings, particularly spiral turns, preferably around a spiral axis. The spiral axis can be aligned perpendicularly to the first face, particularly to the first cover wall. Preferably all windings extend in a common plane. In other words, a line, along which the spiral extends, is preferably planar.

A heat exchanger unit of a dishwasher according to claim 3 is particularly space saving to connect. Preferably, at least one of the unit fluid ports of the first duct and/or the second duct, preferably all unit fluid ports, are arranged at the first cover wall and/or the further cover wall. Such heat exchanger units can be attached to one another at the first cover wall and/or the further cover wall, wherein the first duct and/or the second duct are connected to each other, particularly easily and reliably. Such heat exchanger units are modularly interconnectable in a particularly space saving manner. Losses of thermal energy due to separate fluid ducts can be avoided. At least one unit fluid port for connecting the first duct and/or the second duct can be arranged at the side wall. Preferably, at least one of the unit fluid ports of the first duct and/or the second duct is arranged at the side wall. A stacking of multiple of the heat exchanger units can thus be connected particularly space saving.

A heat exchanger unit of a dishwasher according to claim 4 has an increased capability to recover thermal energy. The at least one wall of the chamber includes the side wall, the first cover wall and/or the further cover wall, particularly the second cover wall. Preferably, at least one of those walls are made from a material with a thermal conductivity that is lower than the thermal conductivity of a material of the partition wall. The chamber wall thus isolates the fluids within the first duct and/or within the second duct against the environment. Heat transfer between the fluids within the first and second ducts is increased. Loss of thermal energy to the environment can be reduced.

Preferably, the partition wall comprises a material, preferably is made from a material, with a thermal conductivity in the range from 1 W/mK to 500 W/mK, preferably from 2 W/mK to 100 W/mK, preferably from 4 W/mK to 60 W/mK, preferably from 10 W/mK to 40 W/mK. The chamber wall can comprise a material, preferably be made from a material, with a thermal conductivity of maximum 2 W/mK, preferably of maximum 1 W/mK, preferably of maximum 0,5 W/mK, preferably of maximum 0,2 W/mK, preferably of maximum 0,1 W/mK. Preferably, such materials are plastic materials, preferably thermoplastic materials and/or comprise a matrix material, particularly a basis material, and a filler, particularly a thermally conductive filler or a thermally insulating filler. The matrix material of the partition wall and the at least one chamber wall, preferably all chamber walls, can be identical. This makes it particularly easy to join the partition wall and the at least one chamber wall, for example by welding and/or overmolding and/or bonding. Such matrix material can be polyamide, preferably polyamide 6. Particularly, the partition walls can be made from a material like Coolpoly^{®} E3617.

A heat exchanger device of a dishwasher as claimed in claim 5 is particularly economical to manufacture and particularly space saving. Preferably, the first cover wall of the second heat exchanger unit adjoins the side wall and/or the partition wall of the first heat exchanger unit, preferably in a fluid tight, particularly watertight and/or gastight, manner. Preferably, at least one, preferably exactly one, unit fluid port of the first fluid duct and/or the second fluid duct of the first heat exchanger unit and of the second heat exchanger unit is arranged at the first cover wall of the second heat exchanger unit. The first cover wall of the second heat exchanger unit preferably comprises through holes for connecting the first ducts and/or the second ducts of the adjacent heat exchanger units. Such through holes can be configured as unit fluid ports. More preferably, the first cover wall comprises exactly two through holes, particularly in the form of unit fluid ports. Thus, attaching the heat exchanger units to one another closes the chamber of the previous heat exchanger unit and/or connects their first ducts and/or second ducts to form the first combined duct and/or the second combined duct.

A heat exchanger device of a dishwasher as claimed in claim 6 is particularly economical to manufacture and energy efficient in use. Preferably, the first ducts and/or the second ducts and/or the partition walls of adjacent heat exchanger units, preferably of all heat exchanger units, overlap each other in the direction perpendicular to at least one of the cover walls, particularly the first cover walls, at least partially, particularly completely, and/or are shaped essentially identically. An overlap in a direction perpendicular to at least one of the cover walls means that there is some overlap in an orthogonal projection on a plane which is parallel to at least one of the cover walls. The first ducts and/or the second ducts of adjacent heat exchanger units, preferably of all heat exchanger units, can overlap such that they are concurrent. Such configuration simplifies manufacturing. Preferably, the unit fluid ports of adjacent heat exchanger units overlap each other.

According to a further aspect of the invention, the combined duct, which is adjacent to the side wall of the first heat exchanger unit is also adjacent to the side walls of all other heat exchanger units within the heat exchanger device. Preferably, the fluid within this combined duct is the cold fluid. The insulation against the environment is thereby further enhanced.

A heat exchanger unit of a dishwasher as claimed in claim 7 is particularly space saving and easy to connect. Preferably, all device fluid ports for connecting the heat exchanger device, particularly the first combined duct and the second combined duct, are arranged on one of the side walls, preferably the side wall of the first heat exchanger unit and/or the side wall of the last heat exchanger unit. Alternatively, at least one, particularly all, device fluid port can be arranged on at least one of the cover walls of the heat exchanger units.

The at least one device fluid port is preferably configured in the form of a hose connection.

A heat exchanger unit of a dishwasher as claimed in claim 8 has a further increased capability to recover thermal energy. The heat exchanger device preferably comprises at least three, preferably at least four, preferably at least six, preferably at least ten, and/or at maximum ten, preferably at maximum six, preferably four, heat exchanger units. All of the heat exchanger units can be stacked on top of each other such that the first cover wall of the subsequent heat exchanger unit closes the chamber of the previous heat exchanger unit, particularly is adjoined to the side wall and/or the partition wall of the previous heat exchanger unit. The last heat exchanger unit, particularly the topmost heat exchanger unit, preferably comprises a second cover wall for closing the chamber of this heat exchanger unit.

According to a further aspect of the invention, the length of a duct for connecting adjacent heat exchanger units, particularly the first ducts and/or the second ducts, is at maximum 20 mm, preferably at maximum 10 mm, preferably at maximum 5 mm, preferably at maximum 2 mm. This preferably applies to at least one, in particular all, heat exchanger units of the heat exchanger device.

A dishwasher as claimed in claim 9 is particularly energy efficient in use. The heat exchanger unit or the heat exchanger device can be connected to fluid ducts of the dishwasher such that the heat exchanger unit or the heat exchanger device is operated in the countercurrent flow configuration. Preferably, the countercurrent flow is within at least one heat exchanger unit, preferably in all of the heat exchanger units, and/or among at least one, preferably all, heat exchanger units. Alternatively, the heat exchanger unit or the heat exchanger device can be operated in cocurrent flow configuration, at least partially, particularly exclusively. The heat exchanger unit or the heat exchanger device can be operated in hybrid flow configuration, comprising concurrent flow and countercurrent flow at least in sections. Countercurrent flow over the entire heat exchanger device increases the amount of thermal energy recovered by the heat exchanger unit or the heat exchanger device.

A dishwasheras claimed in claim 10 is particularly energy efficient in operation. Preferably, the at least one first duct, preferably the first combined duct, is connected to receive water from the fresh water port and/or is arranged adjacent to the at least one side wall, preferably within each heat exchanger unit. Due to such configuration, the cold water adjacent to the side wall isolates the hot water from the environment.

A process of manufacturing a heat exchanger unit for a dishwasher can include the step of joining the partition wall with the first cover wall and/or a further cover wall of the chamber. The advantages of the process correspond to the advantages of the dishwasher, the heat exchanger device and/or the heat exchanger unit described above. Preferably, the process includes at least one of the features or steps described above with reference to the dishwasher, the heat exchanger device and/or the heat exchanger unit. Joining the partition wall with the first cover wall and/or the further cover wall of the chamber, particularly the second cover wall, preferably comprises producing a positive connection, particularly a tongue and groove connection, and/or a force-locking connection and/or a material connection, particularly a welded connection, particularly by hot plate welding, and/or a bonded connection and/or a connection by overmolding. Preferably, a surface of the partition wall is joined to a surface of the first cover wall and/or the further cover wall.

According to a non claimed aspect of the disclosure, at least two, preferably identically shaped, heat exchanger units are joined to each other, particularly to form the heat exchanger device. The first cover wall of a subsequent heat exchanger unit can be joined to the side wall and/or the partition wall of a previous heat exchanger unit, preferably by hot plate welding.

Preferably, the first cover wall and/or the further cover wall and the partition wall and/or the at least one side wall, which are connected to each other, comprise at least partially, preferably exclusively, the same material. Welding, overmolding and bonding can thus be performed particularly economical and reliable.

Joining as described above can be performed between the heat exchanger units and/or between the partition wall and/or the first cover plate and/or a further cover plate and/or the side wall.

A process of manufacturing a heat exchanger unit for a dishwasher can further be characterized in that the joining comprises overmolding and/or welding. This process is particularly economical. Preferably, the thickness of the partition wall is increased in a section which is overmolded, compared to a section which is at a distance from an overmolded surface. Welding is preferably performed at a section with constant wall thickness.

A process of manufacturing a heat exchanger unit for a dishwasher can further be characterized by producing the partition wall and/or the first cover wall and/or the further cover wall by injection molding. This process is particularly economical. Preferably, the partition wall and/or the first cover wall and/or a second cover wall and/or the side wall are produced by injection molding, preferably with at least one, preferably at least two, more preferably at least three, preferably at least four injection points. Particularly, the partition wall can be manufactured with at least one, preferably at least two, preferably at least three, preferably at least four distribution ducts, which preferably span at least one, preferably several, preferably all, windings, particularly spiral turns, preferably in a radial direction to the spiral axis. Each of the distribution ducts preferably comprise at least one injection point. The spiral shaped partition wall can thus be produced particularly reliable and economical.

Further features, advantages and details of the invention result from the subsequent description of an exemplary embodiment. In the drawings:
- Fig. 1: shows a schematic front view of a dishwasher comprising a tub, a sump and a fluid management device,
- Fig. 2: shows a fluid diagram of the dishwasher in Fig. 1, wherein the fluid management device comprises a heat exchanger device to recover thermal energy from hot water from the sump,
- Fig. 3: shows a perspective view of the heat exchanger device in Fig. 2, comprising a first combined duct, a second combined duct and two device fluid ports for each combined fluid duct to connect the heat exchanger device in a fluid conducting manner,
- Fig. 4: shows a longitudinal section through the heat exchanger device in Fig. 2, with four heat exchanger units, each comprising a chamber with a first cover wall and a side wall connected to the first cover wall, and a partition wall,
- Fig. 5: shows a perspective view of the first heat exchanger unit in Fig. 4, comprising the first cover wall and the side wall,
- Fig. 6: shows a perspective view of the second heat exchanger unit in Fig. 4, comprising the first cover wall and the side wall,
- Fig. 7: shows a perspective view of the third heat exchanger unit in Fig. 4, comprising the first cover wall and the side wall,
- Fig. 8: shows a perspective view of the fourth heat exchanger unit in Fig. 4, comprising the first cover wall and the side wall,
- Fig. 9: shows a longitudinal section of the first heat exchanger unit in Fig. 5,
- Fig. 10: shows a longitudinal section of the second heat exchanger unit in Fig. 6,
- Fig. 11: shows a longitudinal section of the third heat exchanger unit in Fig. 7,
- Fig. 12: shows a longitudinal section of the fourth heat exchanger unit in Fig. 8, and
- Fig. 13: shows a perspective view of the partition wall of the first heat exchanger unit in Fig. 4.

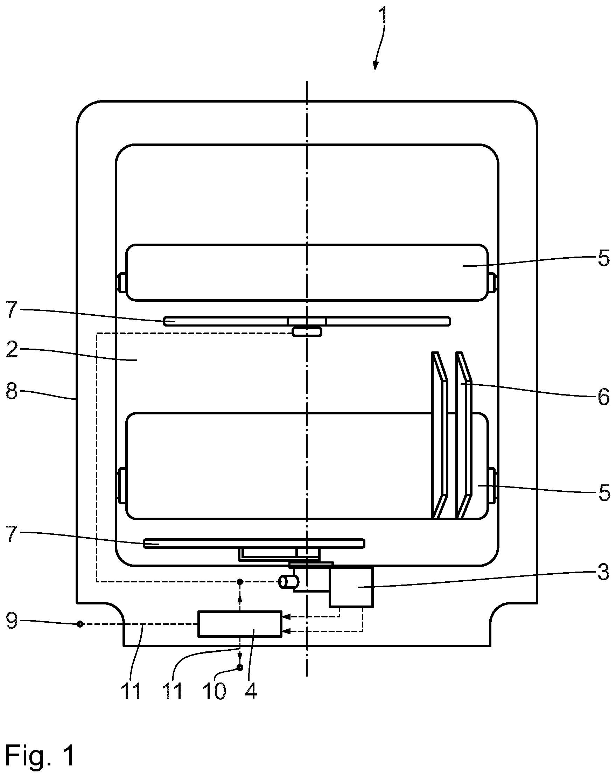

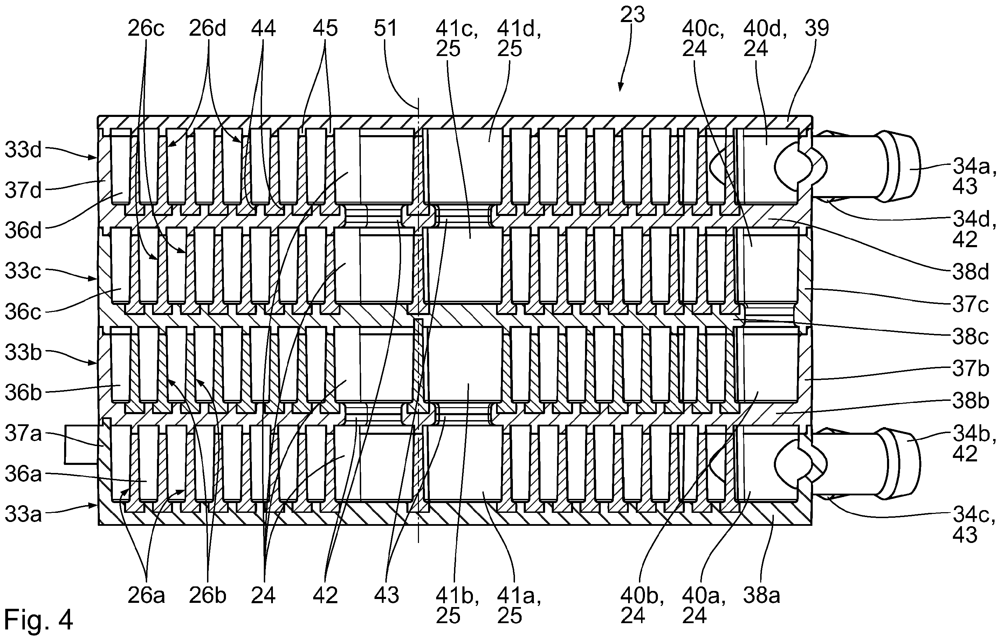

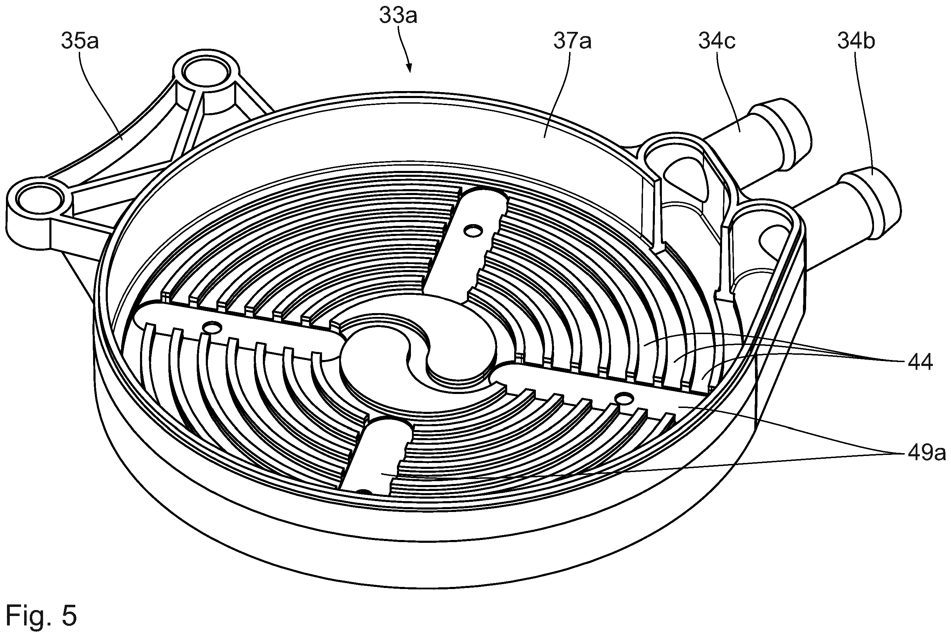

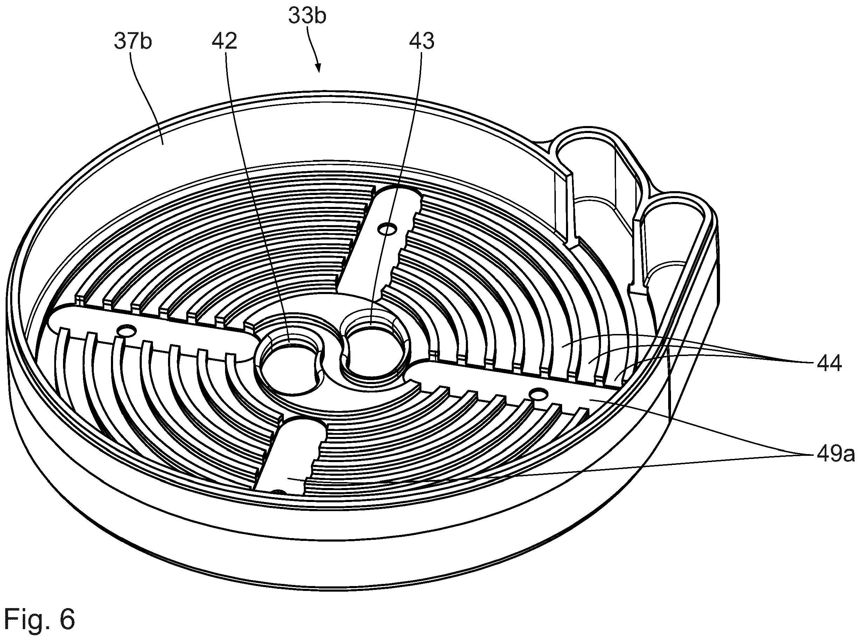

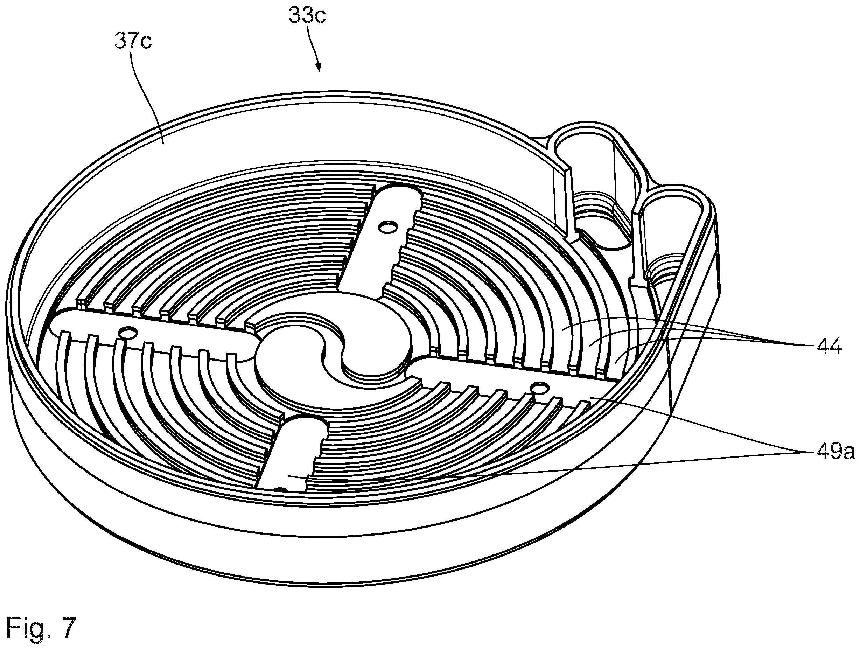

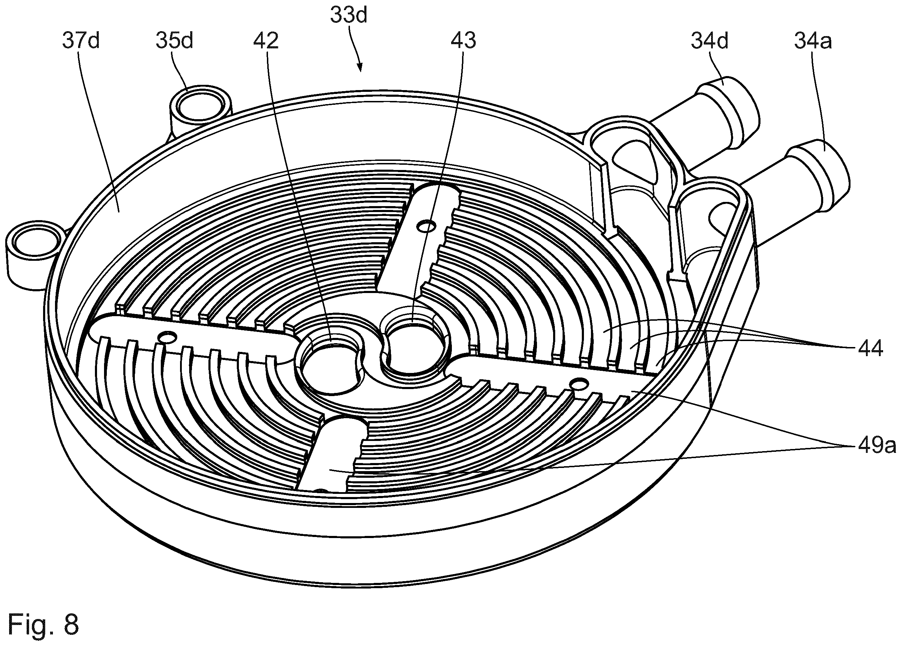

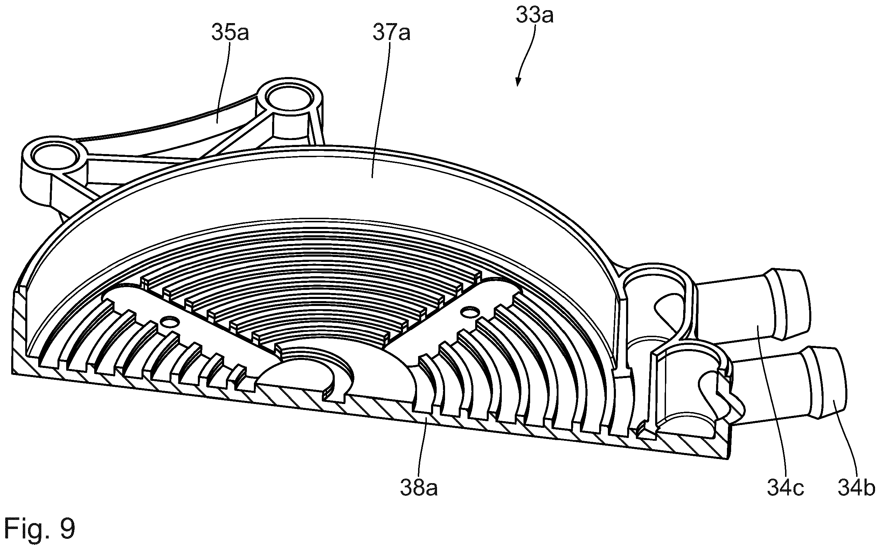

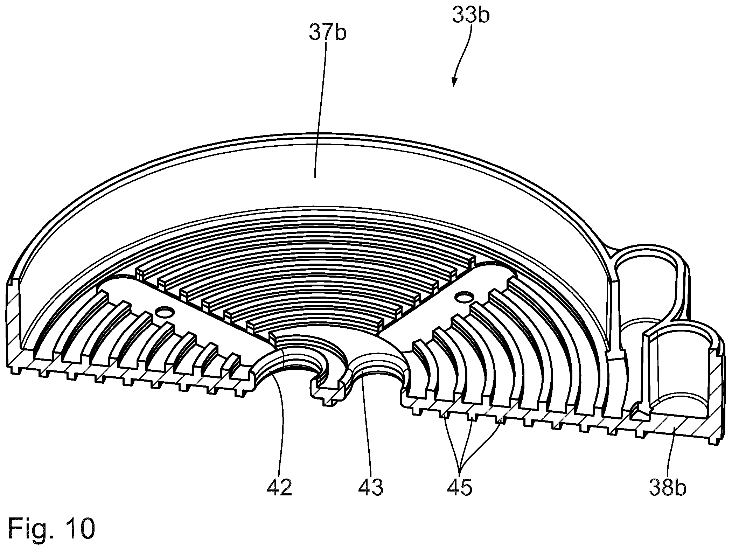

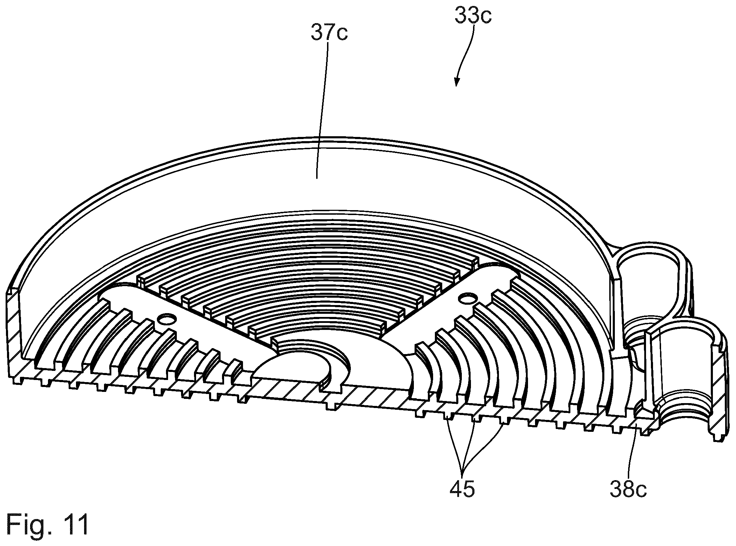

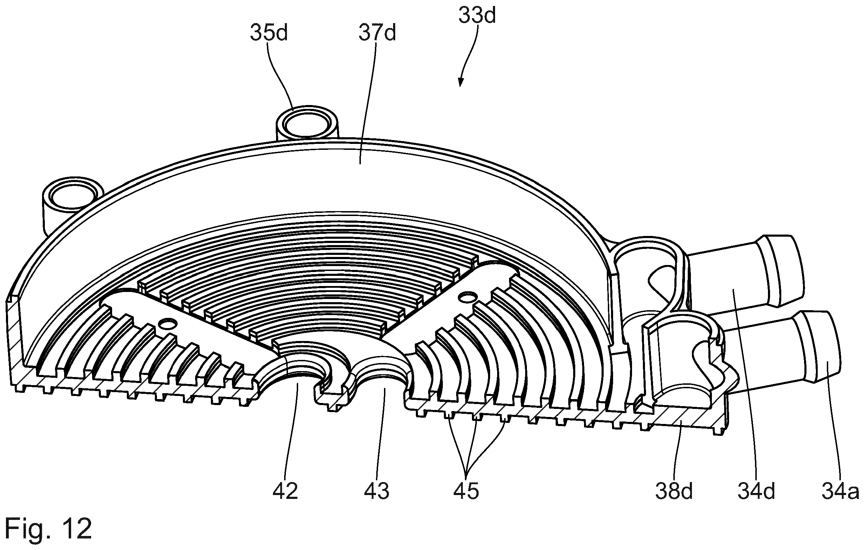

With reference to Fig. 1 to Fig. 13 an embodiment of a dishwasher 1 is described in detail. The dishwasher 1 comprises a tub 2, a sump 3, which is arranged at the bottom of the tub 2 and a fluid management device 4 for supplying water to the tub 2. In the tub 2 two dish baskets 5 for carrying dishes 6 are arranged. Below each of the dish baskets 5 spraying arms 7 for dispensing water are positioned. The spraying arms 7 are in fluid conducting connection with the fluid management device 4.

The tub 2 and the sump 3 are arranged such that the water, which is dispensed in the tub 2 and over the dishes 6 is conducted towards the sump 3 and collected therein. The fluid management device 4 is in fluid conducting connection with the sump 3. The fluid management device 4 is configured to pump washing water from the sump 3 to the spraying arms 7.

The tub 2, the sump 3 and the fluid management device 4 are arranged within a dishwasher housing 8. The dishwasher 1 comprises a fresh water port 9, over which fresh water is received. A drain water port 10 of the dishwasher 1 is configured to discharge drain water. The fresh water port 9 and the drain water port 10 are connected to the fluid management device 4 via water ducts 11. The fluid management device 4 can be connected to the sump 3 via at least one water duct 11 or connected to the sump 3 in an integral construction, particularly without separate water ducts 11.

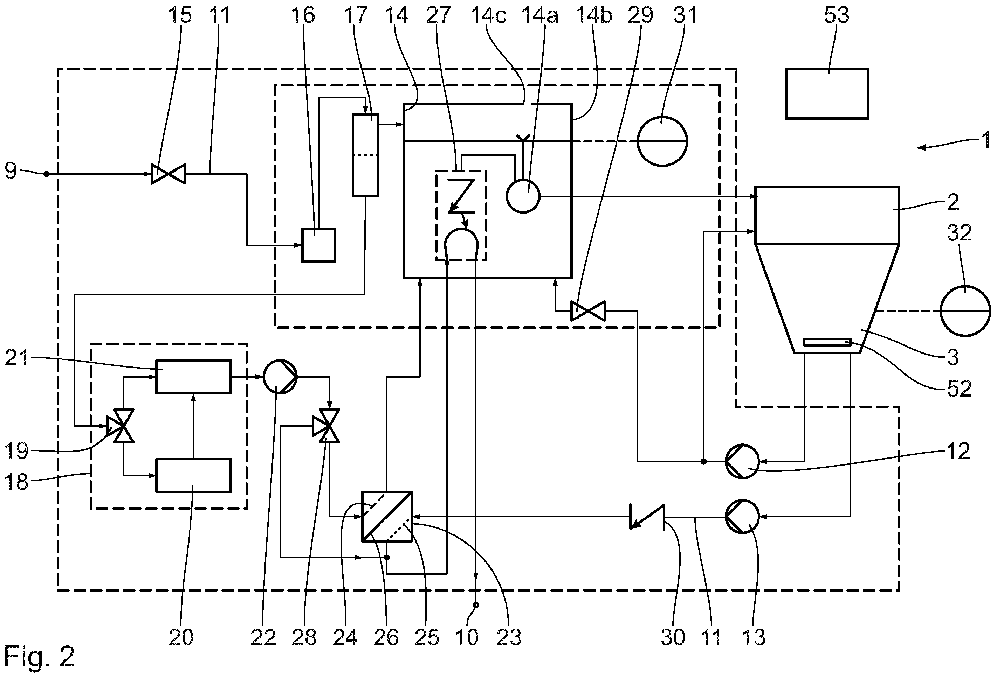

Fig. 2 shows a fluid diagram of the dishwasher 1. The fluid management device 4 comprises a first water pump 12 for circulating water from the sump 3 to the spraying arms 7. Preferably, the fluid management device 4 comprises a second water pump 13 for pumping water from the sump 3 to the drain water port 10. As an alternative to a configuration with the first water pump 12 and the second water pump 13, a single water pump can be utilized to circulate water and to discharge it to the drain water port 10.

The fluid management device 4 comprises a buffer tank 14. The buffer tank 14 is connected to the fresh water port 9 via a fresh water valve 15. Within a water duct 11 between the fresh water port 9, particularly the fresh water valve 15, and the buffer tank 14, there is preferably arranged a flow meter 16 for detecting the mass flow of water from the fresh water port 9 and/or an air break 17 for avoiding backflow towards the fresh water port 9. The buffer tank 14 is connected to the tub 2, particularly to the spraying arms 7, via a water duct 11. The water duct 11 is connected to a tank discharge port 14a of the buffer tank 14. The buffer tank 14 comprises a buffer tank housing 14b. An air vent opening 14c is arranged on a top side of the buffer tank housing 14b and configured to ensure pressure equalization with the environment. Alternatively, the buffer tank housing 14b can be configured without such an air vent opening 14c, particularly without an opening to the environment. The buffer tank 14 is mechanically attached to the tub 2, particularly such that water can flow from the buffer tank 14 to the tub 2 due to gravity.

The fluid management device 4 comprises a water treatment unit 18. The water treatment unit 18 is connected to the fresh water port 9, particularly to the air break 17 by means of a water duct 11. The water treatment unit 18 comprises a treatment valve 19, preferably a three-way valve, and/or a salt tank 20 and/or a detergent tank 21. The salt tank 20 and the detergent tank 21 are arranged downstream from the treatment valve 19. Particularly, the treatment valve 19 distributes the fresh water selectively to the salt tank 20 and/or to the detergent tank 21. The salt tank 20 is preferably connected to the detergent tank 21 via a water duct 11. Preferably, a single outlet port of the water treatment unit 18 is arranged at the detergent tank 21 such that water from the treatment valve 19 either flows only through the detergent tank 21 or through the salt tank 20 and through the detergent tank 21 to leave the water treatment unit 18.

The fluid management device 4 comprises a third water pump 22 for pumping water, particularly water from the treatment unit 18, into the buffer tank 14 and/or to the drain water port 10. The third water pump 22 is connected to the water treatment unit 18, particularly to the detergent tank 22 via a water duct 11.

The fluid management device 4 comprises a heat exchanger device 23 to recover thermal energy. The heat exchanger device 23 comprises a first combined duct 24 and a second combined duct 25. The first combined duct 24 and the second combined duct 25 are at least partially separated from each other by means of partition walls 26a, 26b, 26c, 26d. The partition walls 26a-d are configured to transfer thermal energy between the first combined duct 24 and a fluid within the second combined duct 25.

The first combined duct 24 is connected to the fresh water port 9, particularly via the water treatment unit 18 and/or the third water pump 22, and to the buffer tank 14. The second combined duct 25 is connected to the sump 3, particularly via the second water pump 13, and to the drain water port 10.

Preferably, the fluid management device 4 comprises a drain air break 27. The drain air break 27 preferably is arranged within the buffer tank 14. The second combined duct 25 can be connected to the drain water port 10 via the drain air break 27.

Preferably, the fluid management device 4 comprises a drain valve 28. The drain valve 28 is configured to selectively distribute water from the fresh water port 9, particularly from the water treatment unit 18 and/or the third water pump 22, to the heat exchanger device 23, particularly to the first combined duct 24, and/or to the drain water port 10, preferably via the drain air break 27. The drain valve 28 can be configured in the form of a three-way valve.

The fluid management device 4 preferably comprises a buffer tank valve 29. The buffer tank valve 29 is arranged to reversibly interrupt a fluid duct 11 between the sump 3 and the buffer tank 14, preferably between the first water pump 12 and the buffer tank 14. The buffer tank valve 29 prevents backflow from the buffer tank 14 to the sump 3.

The fluid management device 4 comprises a check valve 30 to prevent backflow of water from the heat exchanger device 23, particularly the second combined duct 25, to the sump 3, particularly to the second water pump 13. The check valve 30 is arranged to reversibly interrupt a water duct 11 between the second water pump 13 and the heat exchanger device 23.

The fluid management device 4 comprises a tank level sensor 31 for detecting the water level within the buffer tank 14. The dishwasher 1 comprises a sump level sensor 32 for detecting the water level within the sump 3.

Particularly, the flow meter 16, the air break 17, the drain air break 27 and/or the third water pump 22 are optional components of the fluid management device 4, particularly of the dishwasher 1.

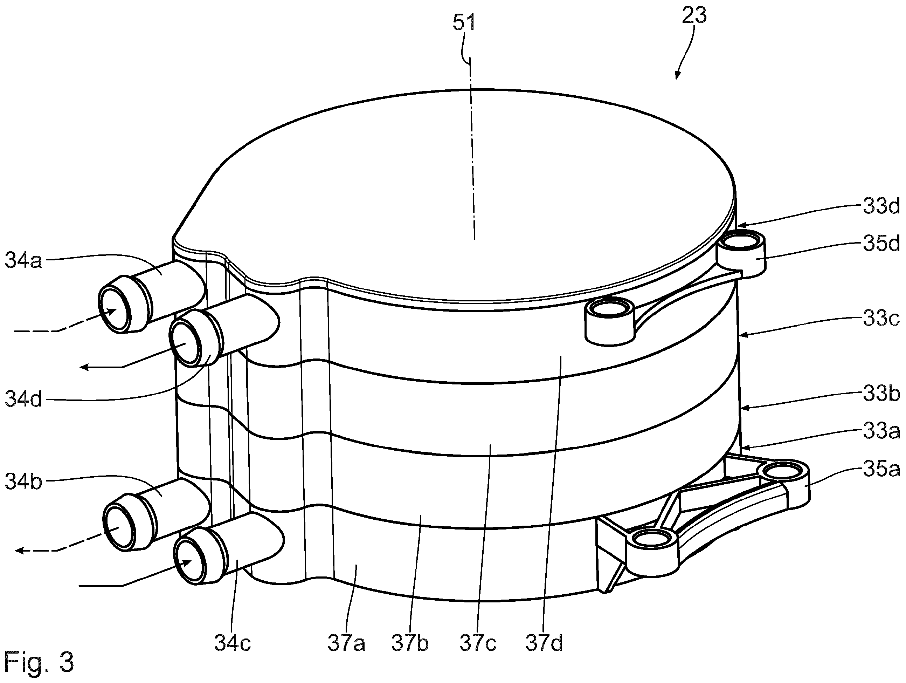

With reference to Fig. 3 to Fig. 13, the heat exchanger device 23 is described in more detail. The heat exchanger device 14 comprises four heat exchanger units 33a, 33b, 33c, 33d. The heat exchanger units 33a-d are stacked on top of each other. The first heat exchanger unit 33a is arranged at the bottom and the fourth heat exchanger unit 33d is arranged at the top of the heat exchanger device 23.

The heat exchanger device 23 comprises four device fluid ports 34a, 34b, 34c, 34d. The first device fluid port 34a is connected to receive fresh water from the fresh water port 9, particularly cold water. The second device fluid port 34b is connected to provide the buffer tank 14 with the water received from the fresh water port 9. The third device fluid port 34c is connected to receive water from the sump 3, particularly hot water. The device fluid port 34d is connected to drain the water from the sump 3 to the drain water port 10. The device fluid ports 34a-d are configured in form of hose connections, preferably with a saw tooth profile with at least one saw tooth for connecting a hose in a fluid tight manner.

The heat exchanger device 23, particularly the first heat exchanger unit 33a and the fourth heat exchanger unit 33d, comprises an attachment means 35a, 35d. The attachment means 35a, 35d comprises through holes for receiving a bolt, particularly a screw or a rivet, for attaching the heat exchanger device 23 to a support, particularly to the dishwasher housing 8.

The heat exchanger units 33a-d each comprise a chamber 36a, 36b, 36c, 36d, which is laterally delimited by means of a side wall 37a, 37b, 37c, 37d. At the first face, particularly at the bottom face, the chamber 36a-d of each heat exchanger unit 33a-d is delimited by means of a first cover wall 38a, 38b, 38c, 38d. Within each of the heat exchanger units 33a-d, the respective side wall 37a-d is connected to the first cover wall 38a-d. Particularly, the side wall 37a-d and the first cover wall 38a-d of each heat exchanger unit 33a-d are formed in one piece. Preferably, the combination of the side wall 37a-d and the first cover wall 38a-d is manufactured by injection molding and/or made of plastic material, preferably thermoplastic material.

The chamber 36a-d of each of the heat exchanger units 33a-d is closed by a further cover wall 36b-d, 39. The second heat exchanger unit 33b is stacked on top of the first heat exchanger unit 33a such that the side wall 37a of the first heat exchanger unit 33a is connected to the first cover wall 38b of the second heat exchanger unit 33b. Thus, the side wall 37a of the first heat exchanger unit 33a connects the first cover walls 38a, b of the adjacent first and second heat exchanger units 33a, b. Accordingly, the first cover wall 38b-d of each heat exchanger unit 33b-d succeeding the first heat exchanger unit 33a is connected to the side wall 37a-c of the preceding, particularly the underlying, heat exchanger unit 33a-c.

At least one, particularly the last, particularly the uppermost, heat exchanger unit 33d comprises a second cover wall 39 for delimiting, particularly for closing, its chamber 36d. The second cover wall 39 is connected to the side wall 37d of the fourth heat exchanger unit 33d.

The device fluid ports 34a-d are arranged at the side walls 37a, 37d of the first and last, particularly the first and fourth, heat exchanger units 33a, 33d.

The heat exchanger units 33a-d each comprise a partition wall 26a-d. The partition walls 26a-d are configured to separate a first duct 40a, 40b, 40c, 40d from a second duct 41a, 41b, 41c, 41d such that a fluid within the first duct 40a-d is separated from a fluid within the second duct 41a-d. Particularly, the partition wall 26a-d divides the space within the chamber 36a-d of each heat exchanger unit 33a-d into the first duct 40a-d and the second duct 41a-d.

The partition wall 26a-d of each heat exchanger unit 33a-d is formed in one piece. The partition wall 26a-d is preferably manufactured by injection molding. Preferably, the partition wall 26a-d is made from plastic material, preferably thermoplastic material, and/or from a material with a thermal conductivity of at least 1 W/mK, preferably at least 2 W/mK, preferably at least 5 W/mK, preferably at least 10 W/mK, preferably at least 20 W/mK, preferably at least 50 W/mK, preferably at least 100 W/mK, and/or with a maximum thermal conductivity of 500 W/mK, preferably of maximum 100W/mK, preferably of maximum 50 W/mK. Particularly, the partition walls 26a-d are made from polyamide with a thermal conductivity in a range from 4 W/mK to 35 W/mK.

Preferably, the partition wall 26a-d comprises a material, preferably a plastic material, which comprises a filler for increasing its thermal conductivity. The filler can comprise a material with a thermal conductivity of at least 50 W/mK, preferably at least 100 W/mK, preferably a metal material such as aluminum and/or copper.

The thermal conductivity of the side walls 37a-d and/or the cover walls 38a-d, 39 is preferably lower than the thermal conductivity of the partition walls 26a-d. The side walls 37a-d and/or the cover walls 38a-d, 39 preferably comprise a material with a thermal conductivity of maximum 10 W/mK, preferably of maximum 1 W/mK, preferably of maximum 0,5 W/mK, preferably of maximum 0,1 W/mK. Such material, preferably plastic material, can comprise a filler for reducing the thermal conductivity, for example glass, particularly hollow glass.

The high thermal conductivity of the partition wall 26a-d improves the transfer of thermal energy between a fluid within the first duct 40a-d and a fluid within the second duct 41a-d. Due to the low thermal conductivity of the side walls 37a-d and/or the cover walls 38a-d, 39, the heat exchanger device 23 is better insulated from the environment. Thus, the heat exchanger device 23 recovers thermal energy particularly efficient.

The heat exchanger units 33a-d each comprise four unit fluid ports 42, 43. First unit fluid ports 42 are configured to connect the first ducts 40a-d. Second unit fluid ports 43 are configured to connect the second ducts 41a-d.

The unit fluid ports 42, 43 between adjacent heat exchanger units 33a-d are configured in the form of through holes within the first cover walls 38b-d.

The partition walls 26a-d are materially bonded to the first cover walls 38a-d. Particularly, the partition walls 26a-d and the first cover walls 38a-d are joined in an overmolding process. The partition walls 26a-d are manufactured by injection molding. The prefabricated partition walls 26a-d are overmolded to form the assembly comprising the partition wall 26a-d and the first cover wall 38a-d, particularly with the side walls 37a-d. To increase adhesion between the partition wall 36a-d and the first cover wall 38a-d, a bottom portion 46 of the partition wall 26a-d interlocks with grooves 44 within the first cover wall 38a-d, particularly in the form of a positive connection, particularly a tongue and groove connection.

The partition walls 26a-d each are connected to the first cover wall 38b-d of the adjacent heat exchanger unit 33c-d or to the second cover wall 39 by hot plate welding. For this purpose, the first cover walls 38b-d and the second cover wall 39 comprise webs 45, particularly in the form protruding walls, which are welded with the partition wall 26a-d by the hot plate welding process.

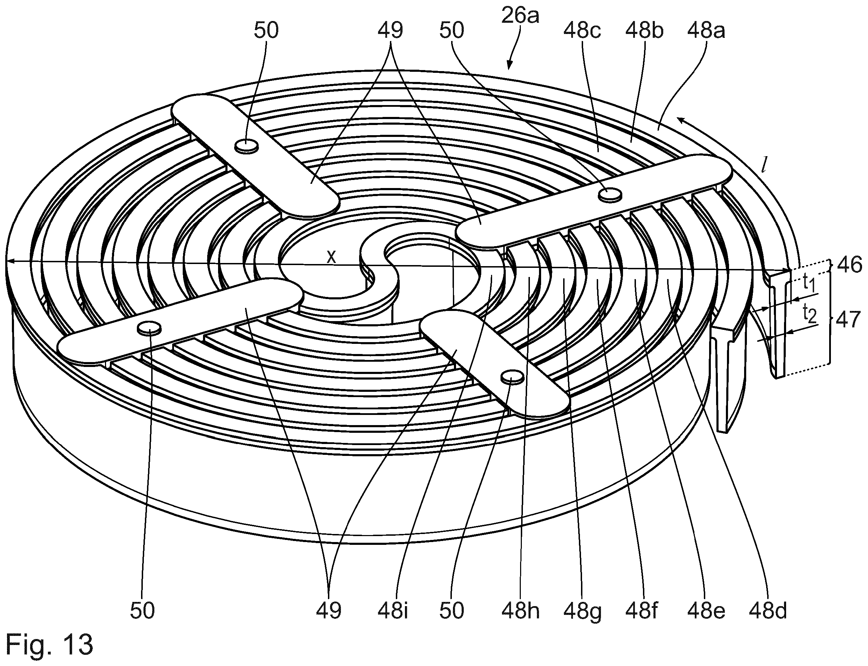

Referring to Fig. 13 the partition wall 26a of the first heat exchanger unit 33a is described in more detail. The partition wall 26a of the first heat exchanger unit 33a and the further partition walls 26c-d are identical. The bottom portion 46 of the partition wall 26a is thicker than a top portion 47. The process step of overmolding the partition wall 26a with the first cover wall 38a can thus be performed in a particularly robust manner. The thinner top portion 47 reduces the thermal resistance of the partition wall 26a, thereby increasing the capability of the heat exchanger device 23 to recover thermal energy.

The partition walls 26a-d are shaped like a spiral, in particular a circular spiral. Thus, also the first ducts 40a-d and the second ducts 41a-d, which are separated from each other by means of the partition walls 26a-d are spiral-shaped, particularly in the form of a circular spiral. A ratio between a length 1 and a maximum extension x of the partition walls 26a-d is at minimum 10. An average thickness t₁ at the bottom portion of the partition walls 26a-d is 2.5 mm. An average thickness t₂ of the top portion of the partition walls 26a-d is 1.5 mm.

The partition walls 26a-d are formed in one piece. The partition walls 26a-d comprise several windings 48a-i, particularly nine windings. The partition walls 26a-d each comprise at least one, particularly four, distribution ducts 49. The distribution ducts 49 span several, preferably all, windings 48a-i. The distribution ducts 49 distribute the molten material in the injection molding process. The cover walls 28a-d comprise distribution duct grooves 49a for receiving the distribution ducts 49. The distribution ducts 49 are arranged at the side of the thicker bottom portions 46 to enhance the flow of material. The heat exchanger units 33a-d are thus particularly economical to assemble.

The respective partition walls 26a-d each comprise at least one, preferably at least two, injection points 50, preferably at each of the distribution ducts 49, for injecting the molten material in the injection molding process. The injection points 50 are located in the radially outer half of each distribution duct 49.

The first ducts 40a-d of all heat exchanger units 33a-d overlap each other in a direction perpendicular to the cover walls 38a-d, 39. The direction perpendicular to the cover walls 38a-d, 39 is parallel to a central axis 51, which is substantially concentric with the windings 48a-i of each partition wall 26a-d. Particularly, in an orthogonal projection to a plane perpendicular to the central axis 51, the first ducts 40a-d, the second ducts 41a-d and the windings 48a-i are coincident.

The heat exchanger device 23 is operated in countercurrent flow configuration. Particularly, each of the heat exchanger units 33a-d is operated in countercurrent flow configuration. The heat exchanger units 33a-d are interconnected such that there is also a countercurrent flow between adjacent heat exchanger units 33a-d. In other words, the combined ducts 24, 25 are configured to be operated in countercurrent flow operation throughout.

The radially outermost ducts within each heat exchanger unit 33a-d are the first ducts 40a-d. The first ducts 40a-d are preferably connected for conducting cold water. Thus, the first ducts 40a-d insulate the second ducts 41a-d against the environment and help to save thermal energy.

The dishwasher 1 comprises a heating element 52 for heating water within the sump 3. The dishwasher 1 further comprises a control unit 53 for operating the dishwasher 1. The control unit 53 is in signal connection with the water pumps 12, 13, 22, the valves 15, 19, 28, 29 the flow meter 16, the level sensors 31, 32 and the heating element 52. The control unit 53 is configured to provide these components with electric energy and/or to control them.

The functionality of dishwasher 1, in particular the heat exchanger device 23, in particular the heat exchanger units 33a-d, is as follows:

In an initial state, the control unit 53 is deactivated and all valves 15, 19, 28, 29 are closed. By means of a user interface not illustrated, a user selects a washing program and starts the washing process. The control unit 53 is activated and starts the first washing phase. In the first washing phase, the control device 53 provides a signal for opening the fresh water valve 15. The sump 3 is filled with fresh water via the flow meter 16, the air break 17 and the buffer tank 14. Once the sump 3 is filled, the heating element 52 is activated to heat the water.

The control device 53 controls the first water pump 12 and the buffer tank valve 29 to circulate the hot water from the sump 3 to the spraying arms 7 and over the dishes 6. Coarse dirt is removed from the dishes 6. Stubborn stains on the dishes 6 are soaked. The first washing phase is finished.

The control unit 53 in a second washing phase activates the second water pump 13 to pump the hot water from the sump 3 via the heat exchanger device 23 to the drain water port 10. Simultaneously, the fresh water valve 15 and the treatment valve 19 are opened such that fresh water, particularly treated with salt in the salt tank 20 and/or with detergent in the detergent 21, is provided at the heat exchanger device 23, particularly at the first combined duct 24.

In the heat exchanger device 23, thermal energy is transferred from the hot water in the second combined duct 25 to the cold water in the first combined duct 24. The fresh water heated in the heat exchanger device 23 is conducted to the tub 2 via the buffer tank 14.

If necessary, the water is further heated by means of the heating element 52 within the sump 3. By activating the first water pump 12, the water is again circulated through the spraying arms 7 and over the dishes 6. The circulation of water is repeated until the dishes 6 are cleaned. The second washing phase is finished.

The control unit 53 in a third washing phase controls the second water pump 13 to pump water from the sump 3 to the drain water port 10 via the heat exchanger device 23, particularly via the second combined duct 25. Simultaneously, fresh water is provided at the heat exchanger device 23, particularly at the first combined duct 24 via the detergent tank 22, which has been emptied during the second washing phase. Fresh water without detergent is heated within the heat exchanger device 23 and pumped by means of the third water pump 22 and via the buffer tank 14 into the tub 2. The dishes are cleaned with the fresh water. The fresh water is circulated over the dishes by means of the first water pump 12. The detergent is removed from the dishes 6. The third washing phase is finished.

The control unit 53 closes the valve 29 and opens the valve 19. The valve 28 is controlled such that water pumped by the third water pump 22 is directed to the drain water port 10 and not to the heat exchanger device 23. The valve 15 is closed. The second water pump 13 and the third water pump 22 are activated. Water within the fluid management device 4 is substantially completely pumped out to the drain water port 10. The washing process is finished.

The heat exchanger device 23 allows recovery of thermal energy from hot water to a particularly high degree. In particular, the stacking with multiple heat exchanger units 33a-d provides for particularly long first and second combined ducts 24, 25 and a particularly large heat transfer surface provided by the multiple partition walls 26a-d. The recovery of thermal energy is further enhanced by the rectangular cross section and the spiral shape of the first and second ducts 40a-d, 41a-d, which increase the surface for conducting the thermal energy. The partition walls 26a-d, made from a material with a high thermal conductivity, further increase the recovery of thermal energy. The countercurrent flow operation of the heat exchanger device 23 increases the amount of thermal energy that can be recovered from the hot water.

The heat exchanger units 33a-d are manufactured particularly economically in the injection molding process. Joining the heat exchanger units 33a-d with each other and with the second cover wall 39, particularly in a fluid tight manner, preferably by hot plate welding, is particularly reliable. The dishwasher 1, alternatively a washing machine, comprising such a heat exchanger device 23 is particularly economical to manufacture and energy efficient in operation.

## Claims

1. Dishwasher (1), comprising
1.1 a heat exchanger unit (33a-d) to recover thermal energy, comprising
1.1.1 a chamber (36a-d) with a first cover wall (38a-d) and a side wall (37a-d) connected to the first cover wall (38a-d),
1.1.2 within the chamber (36a-d) a first duct (40a-d),
1.1.3 within the chamber (36a-d) a second duct (41a-d) adjacent to the first duct (40a-d), and
1.1.4 a partition wall (26a-d), which adjoins the first cover wall (38a-d), and which is configured to separate a fluid within the first duct (40a-d) from a fluid within the second duct (41a-d), and to transfer thermal energy between the fluid within the first duct (40a-d) and the fluid within the second duct (41a-d),
or
1.2 a heat exchanger device (23) comprising
1.2.1 a first heat exchanger unit (33a) and a second heat exchanger unit (33b) to recover thermal energy, each comprising
1.2.1.1 a chamber (36a-d) with a first cover wall (38a-d) and a side wall (37a-d) connected to the first cover wall (38a-d),
1.2.1.2 within the chamber (36a-d) a first duct (40a-d),
1.2.1.3 within the chamber (36a-d) a second duct (41a-d) adjacent to the first duct (40a-d), and
1.2.1.4 a partition wall (26a-d), which adjoins the first cover wall (38a-d), and which is configured to separate a fluid within the first duct (40a-d) from a fluid within the second duct (41a-d), and to transfer thermal energy between the fluid within the first duct (40a-d) and the fluid within the second duct (41a-d),
1.2.2 wherein the second heat exchanger unit (33b) is connected to the first heat exchanger unit (33a)
1.2.2.1 such that the first ducts (40a, 40b) are connected to each other to form a first combined duct (24), and
1.2.2.2 such that the second ducts (41a, 41b) are connected to each other to form a second combined duct (25), which is separated from the first combined duct (24),
1.3 a first dishwasher duct (11) for conducting cold fluid, wherein the first dishwasher duct (11) is connected to the first duct (40a-d) or to the first combined duct (24), and
1.4 a second dishwasher duct (11) for conducting hot fluid, wherein the second dishwasher duct (11) is connected to the second duct (41a-d) or to the second combined duct (25).

2. Dishwasher (1) according to claim 1, **characterized in that** the partition wall (26a-d) and/or the first duct (40a-d) and/or the second duct (41a-d) of the heat exchanger unit (33a-d) are shaped in a spiral manner.

3. Dishwasher (1) according to claim 1 or 2, **characterized by** at least one unit fluid port (42, 43) of the heat exchanger unit (33a-d) for connecting the first duct (40a-d) and/or the second duct (41a-d), wherein the at least one unit fluid port (42, 43) is arranged at the first cover wall (38a-d) and/or a further cover wall (38b-d, 39) connected to the side wall (37a-d).

4. Dishwasher (1) according to any of the preceding claims, **characterized in that** the partition wall (26a-d) of the heat exchanger unit (33a-d) is made from a material with a thermal conductivity that is different from a thermal conductivity of a material of the at least one wall (37a-d, 38a-d, 39) of the chamber (36a-d).

5. Dishwasher (1) according to any of the preceding claims, **characterized in that** the first cover wall (38b) of the second heat exchanger unit (33b) of the heat exchanger device (23) is connected to the side wall (37a) of the first heat exchanger unit (33a) to delimit the chamber (36a) of the first heat exchanger unit (33a).

6. Dishwasher (1) according to any of the preceding claims, **characterized in that** the first ducts (40a-d) and/or the second ducts (41a-d) of the heat exchanger units (33a-d) of the heat exchanger device (23) overlap each other in a direction perpendicular to at least one of the cover walls (38a-d, 39).

7. Dishwasher (1) according to any of the preceding claims, **characterized by** at least one device fluid port (34a-d) of the heat exchanger device (23) for connecting the first combined duct (24) and/or the second combined duct (25), wherein the at least one device fluid port (34a-d) is arranged on at least one of the side walls (37a-d).

8. Dishwasher (1) according to any of the preceding claims, **characterized by** the heat exchanger device (23) comprising at least one further heat exchanger unit (33c, 33d) comprising
8.1 a chamber (36a-d) with a first cover wall (38a-d) and a side wall (37a-d) connected to the first cover wall (38a-d),
8.2 within the chamber (36a-d) a first duct (40a-d),
8.3 within the chamber (36a-d) a second duct (41a-d) adjacent to the first duct (40a-d), and
8.4 a partition wall (26a-d), which adjoins the first cover wall (38a-d), and which is configured to separate a fluid within the first duct (40a-d) from a fluid within the second duct (41a-d), and to transfer thermal energy between the fluid within the first duct (40a-d) and the fluid within the second duct (41a-d).

9. Dishwasher (1) according to any of the preceding claims, **characterized in that** the heat exchanger unit (33a-d) or the heat exchanger device (23) is operated in countercurrent flow configuration.

10. Dishwasher (1) according to c any of the preceding claims, **characterized in that** the first duct (40a-d) or the first combined duct (24) is adjacent to the at least one side wall (37a-d).

## Patentansprüche

1. Geschirrspülmaschine (1), umfassend
1.1 eine Wärmetauschereinheit (33a-d) zur Rückgewinnung von Wärmeenergie, umfassend
1.1.1 eine Kammer (36a-d) mit einer ersten Abdeckwand (38a-d) und einer Seitenwand (37a-d), die mit der ersten Abdeckwand (38a-d) verbunden ist,
1.1.2 innerhalb der Kammer (36a-d) einen ersten Kanal (40a-d),
1.1.3 innerhalb der Kammer (36a-d) einen zweiten Kanal (41a-d) neben dem ersten Kanal (40a-d) und
1.1.4 eine Trennwand (26a-d), die an die erste Abdeckwand (38a-d) grenzt und die dazu eingerichtet ist, ein Fluid innerhalb des ersten Kanals (40a-d) von einem Fluid innerhalb des zweiten Kanals (41a-d) zu trennen und Wärmeenergie zwischen dem Fluid innerhalb des ersten Kanals (40a-d) und dem Fluid innerhalb des zweiten Kanals (41a-d) zu übertragen,
oder
1.2 eine Wärmetauschervorrichtung (23), umfassend
1.2.1 eine erste Wärmetauschereinheit (33a) und eine zweite Wärmetauschereinheit (33b) zur Rückgewinnung von Wärmeenergie, jeweils umfassend:
1.2.1.1 eine Kammer (36a-d) mit einer ersten Abdeckwand (38a-d) und einer Seitenwand (37a-d), die mit der ersten Abdeckwand (38a-d) verbunden ist,
1.2.1.2 innerhalb der Kammer (36a-d) einen ersten Kanal (40a-d),
1.2.1.3 innerhalb der Kammer (36a-d) einen zweiten Kanal (41a-d) neben dem ersten Kanal (40a-d) und
1.2.1.4 eine Trennwand (26a-d), die an die erste Abdeckwand (38a-d) grenzt und die dazu eingerichtet ist, ein Fluid innerhalb des ersten Kanals (40a-d) von einem Fluid innerhalb des zweiten Kanals (41a-d) zu trennen und Wärmeenergie zwischen dem Fluid innerhalb des ersten Kanals (40a-d) und dem Fluid innerhalb des zweiten Kanals (41a-d) zu übertragen,
1.2.2 wobei die zweite Wärmetauschereinheit (33b) mit der ersten Wärmetauschereinheit (33a) dergestalt verbunden ist,
1.2.2.1 dass die ersten Kanäle (40a, 40b) miteinander verbunden sind, um einen ersten kombinierten Kanal (24) zu bilden, und
1.2.2.2 dass die zweiten Kanäle (41a, 41b) miteinander verbunden sind, um einen zweiten kombinierten Kanal (25) zu bilden, der von dem ersten kombinierten Kanal (24) getrennt ist,
1.3 einen ersten Geschirrspülmaschinenkanal (11) zum Leiten von kaltem Fluid, wobei der erste Geschirrspülmaschinenkanal (11) mit dem ersten Kanal (40a-d) oder mit dem ersten kombinierten Kanal (24) verbunden ist, und
1.4 einen zweiten Geschirrspülmaschinenkanal (11) zum Leiten von heißem Fluid, wobei der zweite Geschirrspülmaschinenkanal (11) mit dem zweiten Kanal (41a-d) oder mit dem zweiten kombinierten Kanal (25) verbunden ist.

2. Geschirrspülmaschine (1) nach Anspruch 1, **dadurch gekennzeichnet, dass** die Trennwand (26a-d) und/oder der erste Kanal (40a-d) und/oder der zweite Kanal (41a-d) der Wärmetauschereinheit (33a-d) in einer spiralförmigen Weise geformt sind.

3. Geschirrspülmaschine (1) nach Anspruch 1 oder 2, **gekennzeichnet durch** mindestens einen Einheitsfluidport (42, 43) der Wärmetauschereinheit (33a-d) zum Verbinden des ersten Kanals (40a-d) und/oder des zweiten Kanals (41a-d), wobei der mindestens eine Einheitsfluidport (42, 43) an der ersten Abdeckwand (38a-d) und/oder einer weiteren Abdeckwand (38b-d, 39), die mit der Seitenwand (37a-d) verbunden ist, angeordnet ist.

4. Geschirrspülmaschine (1) nach einem der vorangehenden Ansprüche, **dadurch gekennzeichnet, dass** die Trennwand (26a-d) der Wärmetauschereinheit (33a-d) aus einem Material mit einer Wärmeleitfähigkeit hergestellt ist, die sich von einer Wärmeleitfähigkeit eines Materials der mindestens einen Wand (37a-d, 38a-d, 39) der Kammer (36a-d) unterscheidet.

5. Geschirrspülmaschine (1) nach einem der vorangehenden Ansprüche, **dadurch gekennzeichnet, dass** die erste Abdeckwand (38b) der zweiten Wärmetauschereinheit (33b) der Wärmetauschervorrichtung (23) mit der Seitenwand (37a) der ersten Wärmetauschereinheit (33a) verbunden ist, um die Kammer (36a) der ersten Wärmetauschereinheit (33a) zu begrenzen.

6. Geschirrspülmaschine (1) nach einem der vorangehenden Ansprüche, **dadurch gekennzeichnet, dass** die ersten Kanäle (40a-d) und/oder die zweiten Kanäle (41a-d) der Wärmetauschereinheiten (33a-d) der Wärmetauschervorrichtung (23) einander in einer Richtung senkrecht zu mindestens einer der Abdeckwände (38a-d, 39) überlappen.

7. Geschirrspülmaschine (1) nach einem der vorangehenden Ansprüche, **gekennzeichnet durch** mindestens einen Vorrichtungsfluidport (34a-d) der Wärmetauschervorrichtung (23) zum Verbinden des ersten kombinierten Kanals (24) und/oder des zweiten kombinierten Kanals (25), wobei der mindestens eine Vorrichtungsfluidport (34a-d) an mindestens einer der Seitenwände (37a-d) angeordnet ist.

8. Geschirrspülmaschine (1) nach einem der vorangehenden Ansprüche, **dadurch gekennzeichnet, dass** die Wärmetauschervorrichtung (23) mindestens eine weitere Wärmetauschereinheit (33c, 33d) umfasst, umfassend
8.1 eine Kammer (36a-d) mit einer ersten Abdeckwand (38a-d) und einer Seitenwand (37a-d), die mit der ersten Abdeckwand (38a-d) verbunden ist,
8.2 innerhalb der Kammer (36a-d) einen ersten Kanal (40a-d),
8.3 innerhalb der Kammer (36a-d) einen zweiten Kanal (41a-d) neben dem ersten Kanal (40a-d) und
8.4 eine Trennwand (26a-d), die an die erste Abdeckwand (38a-d) grenzt und die dazu eingerichtet ist, ein Fluid innerhalb des ersten Kanals (40a-d) von einem Fluid innerhalb des zweiten Kanals (41a-d) zu trennen und Wärmeenergie zwischen dem Fluid innerhalb des ersten Kanals (40a-d) und dem Fluid innerhalb des zweiten Kanals (41a-d) zu übertragen.

9. Geschirrspülmaschine (1) nach einem der vorangehenden Ansprüche, **dadurch gekennzeichnet, dass** die Wärmetauschereinheit (33a-d) oder die Wärmetauschervorrichtung (23) in einer Gegenstromkonfiguration betrieben wird.

10. Geschirrspülmaschine (1) nach einem der vorangehenden Ansprüche, **dadurch gekennzeichnet, dass** der erste Kanal (40a-d) oder der erste kombinierte Kanal (24) an die mindestens eine Seitenwand (37a-d) grenzt.

## Revendications

1. Lave-vaisselle (1), comprenant
1.1 une unité d'échange de chaleur (33a-d) pour récupérer l'énergie thermique, comprenant
1.1.1 une chambre (36a-d) avec une première paroi de couvercle (38a-d) et une paroi latérale (37a-d) reliée à la première paroi de couvercle (38ad),
1.1.2 à l'intérieur de la chambre (36a-d), un premier conduit (40a-d),
1.1.3 à l'intérieur de la chambre (36a-d), un second conduit (41a-d) adjacent au premier conduit (40a-d), et
1.1.4 une paroi de séparation (26a-d), qui jouxte la première paroi de couvercle (38a-d), et qui est configurée pour séparer un fluide à l'intérieur du premier conduit (40a-d) d'un fluide à l'intérieur du second conduit (41a-d), et pour transférer l'énergie thermique entre le fluide à l'intérieur du premier conduit (40a-d) et le fluide à l'intérieur du second conduit (41a-d),
ou
1.2 un dispositif d'échange de chaleur (23) comprenant
1.2.1 une première unité d'échange de chaleur (33a) et une seconde unité d'échange de chaleur (33b) pour récupérer l'énergie thermique, chacune comprenant
1.2.1.1 une chambre (36a-d) avec une première paroi de couvercle (38a-d) et une paroi latérale (37a-d) reliée à la première paroi de couvercle (38a-d),
1.2.1.2 à l'intérieur de la chambre (36a-d), un premier conduit (40ad),
1.2.1.3 à l'intérieur de la chambre (36a-d), un second conduit (41ad) adjacent au premier conduit (40a-d), et
1.2.1.4 une paroi de séparation (26a-d), qui jouxte la première paroi de couvercle (38a-d), et qui est configurée pour séparer un fluide à l'intérieur du premier conduit (40a-d) d'un fluide à l'intérieur du second conduit (41a-d), et pour transférer l'énergie thermique entre le fluide à l'intérieur du premier conduit (40a-d) et le fluide à l'intérieur du second conduit (41a-d),
1.2.2 dans lequel la seconde unité d'échange de chaleur (33b) est reliée à la première unité d'échange de chaleur (33a)
1.2.2.1 de telle sorte que les premiers conduits (40a, 40b) soient reliés entre eux pour former un premier conduit combiné (24), et
1.2.2.2 de telle sorte que les seconds conduits (41a, 41b) soient reliés entre eux pour former un second conduit combiné (25), qui est distinct du premier conduit combiné (24),
1.3 un premier conduit de lave-vaisselle (11) pour conduire le fluide froid, dans lequel le premier conduit de lave-vaisselle (11) est relié au premier conduit (40a-d) ou au premier conduit combiné (24), et
1.4 un second conduit de lave-vaisselle (11) pour conduire le fluide chaud, dans lequel le second conduit de lave-vaisselle (11) est relié au second conduit (41a-d) ou au second conduit combiné (25).

2. Lave-vaisselle (1) selon la revendication 1, **caractérisé en ce que** la paroi de séparation (26a-d) et/ou le premier conduit (40a-d) et/ou le second conduit (41a-d) de l'unité d'échange de chaleur (33a-d) sont façonnés en forme de spirale.

3. Lave-vaisselle (1) selon la revendication 1 ou 2, **caractérisé par** au moins un orifice de fluide unitaire (42, 43) de l'unité d'échange de chaleur (33a-d) pour relier le premier conduit (40a-d) et/ou le second conduit (41a-d), dans lequel l'au moins un orifice de fluide unitaire (42, 43) est disposé au niveau de la première paroi de couvercle (38a-d) et/ou d'une autre paroi de couvercle (38b-d, 39) reliée à la paroi latérale (37a-d).

4. Lave-vaisselle (1) selon l'une quelconque des revendications précédentes, **caractérisé en ce que** la paroi de séparation (26a-d) de l'unité d'échange de chaleur (33a- d) est constituée d'un matériau dont la conductivité thermique est différente de la conductivité thermique d'un matériau de l'au moins une paroi (37a- d, 38a-d, 39) de la chambre (36a-d).

5. Lave-vaisselle (1) selon l'une quelconque des revendications précédentes, **caractérisé en ce que** la première paroi de couvercle (38b) de la seconde unité d'échange de chaleur (33b) du dispositif d'échange de chaleur (23) est reliée à la paroi latérale (37a) de la première unité d'échange de chaleur (33a) pour délimiter la chambre (36a) de la première unité d'échange de chaleur (33a).

6. Lave-vaisselle (1) selon l'une quelconque des revendications précédentes, **caractérisé en ce que** les premiers conduits (40a-d) et/ou les seconds conduits (41a-d) des unités d'échange de chaleur (33a-d) du dispositif d'échange de chaleur (23) se chevauchent dans une direction perpendiculaire à au moins l'une des parois de couvercle (38a-d, 39).

7. Lave-vaisselle (1) selon l'une quelconque des revendications précédentes, **caractérisé par** au moins un orifice de fluide de dispositif (34a-d) du dispositif d'échange de chaleur (23) pour relier le premier conduit combiné (24) et/ou le second conduit combiné (25), dans lequel l'au moins un orifice de fluide de dispositif (34a-d) est disposé sur au moins l'une des parois latérales (37a-d).

8. Lave-vaisselle (1) selon l'une quelconque des revendications précédentes, **caractérisé par** le dispositif d'échange de chaleur (23) comprenant au moins une autre unité d'échange de chaleur (33c, 33d) comprenant 8.1 une chambre (36a-d) avec une première paroi de couvercle (38a-d) et une paroi latérale (37a-d) reliée à la première paroi de couvercle (38a-d), 8.2 à l'intérieur de la chambre (36a-d), un premier conduit (40a-d),
8.3 à l'intérieur de la chambre (36a-d), un second conduit (41a-d) adjacent au premier conduit (40a-d), et
8.4 une paroi de séparation (26a-d), qui jouxte la première paroi de couvercle (38a-d), et qui est configurée pour séparer un fluide à l'intérieur du premier conduit (40a-d) d'un fluide à l'intérieur du second conduit (41a-d), et pour transférer l'énergie thermique entre le fluide à l'intérieur du premier conduit (40a-d) et le fluide à l'intérieur du second conduit (41a-d).

9. Lave-vaisselle (1) selon l'une quelconque des revendications précédentes, **caractérisé en ce que** l'unité d'échange de chaleur (33a-d) ou le dispositif d'échange de chaleur (23) fonctionne en configuration d'écoulement à contre-courant.

10. Lave-vaisselle (1) selon l'une quelconque des revendications précédentes, **caractérisé en ce que** le premier conduit (40a-d) ou le premier conduit combiné (24) est adjacent à l'au moins une paroi latérale (37a-d).
